# EUROPEAN PATENT SPECIFICATION

(11) **EP 1 843 274 B1**
(45) Date of publication and mention of the grant of the patent: **11.10.2017**
(21) Application number: 07251513.3
(22) Date of filing: 05.04.2007
(51) Int. Cl.: G06F 21/00, H04L 29/06

(54) **Digital rights management system**
System zur Verwaltung digitaler Rechte
Système de gestion des droits numériques

(30) Priority: 06.04.2006 GB 0606963
(43) Date of publication of application: 10.10.2007
(73) Proprietor: Vodafone Group PLC, Newbury Berkshire RG14 2FN (GB); Philips Electronics Nederland, B.V., 5621 JH Eindhoven (NL); Stichting Telematica Instituut, 7500 AN Enschede (NL)
(72) Inventor: Montaner, Javier, 6211 GD Maastricht (NL); Vreilink, Koen H. J., 5621 JH Eindhoven (NL); Koster, Robert P., 5621 JH Eindhoven (NL); Hulsebosch, Bob, 7500 AN Enschede (NL)
(74) Representative: Boult Wade Tennant

(56) References cited:
- US-A1- 2003 208 677
- US-A1- 2004 133 640

## Description

The present invention relates to a content protection system. In particular, the invention relates to the extension of limited rights without requiring connection to a content protection management server.

One well-known type of content protection protocol is Digital Rights Management (DRM). DRM is a technology that allows encrypted digital files (or "content") to be distributed readily to potential users without charge. The encrypted data may be freely, onwardly transmitted by the user receiving the data. However, for any user to be able to make use of the data, that data must be decrypted. To obtain a key to decrypt the data, a licence must be purchased or otherwise obtained from a rights issuer or licence broker.

DRM architecture includes the following functional entities.

Content provider: the content provider is an entity that delivers DRM content such as a song, computer program or mobile telephone ring tone. The content is typically encrypted and cannot be used in the form as received.

DRM content: this is the digital file containing data desired by the user. As indicated above, this can be freely distributed. The content is in encrypted form. Existing Digital Rights Management (DRM) systems encrypt digital Content with a Content Encryption Key (CEK).

DRM agent: a DRM agent embodies a trusted entity in a device such as a mobile telephone or personal computer (PC). This trusted entity is responsible for enforcing permissions and constraints associated with DRM content, controlling access to the DRM content.

Licence or rights object (RO): a rights object is, for example, an XML document expressing permissions and constraints associated with a piece of DRM content. ROs govern how the DRM content may be used. DRM content cannot be used without an associated rights object, and may be only used as specified by the RO. The RO typically includes a key to allow decryption of the relevant encrypted content. In DRM systems that use a CEK for encryption, the CEK is distributed to end devices inside the RO.

Rights issuer (RI): the rights issuer is an entity that assigns permissions and constraints to the DRM content. The RI also generates and distributes rights objects.

User: a user is the human user of DRM content. Users can only access DRM content through a DRM agent present on their device.

In current DRM systems, when a user wants to move his content (or licences) from one device to another, he needs to identify the destination device on which he will render the content. These systems regenerate or transcode the original licences (including the content encryption keys) and encrypt them to the targeted devices.

Recent DRM schemes allow the construction of domains of devices which permit a limited sharing of content between devices, as might be convenient for a user who possesses more than one DRM enabled device between which he wishes to exchange content freely. The term "domain" refers to a grouping of associated devices and (authenticated) users. Management of domains is governed either by a remote domain server (e.g. OMA, iTunes) or by a (local) domain management device. As evidence of membership of a group, each enabled device stores an appropriate domain key.

Guest (non-authenticated) users wishing to access a domain temporarily are faced with having to obtain the domain key somehow, thereby becoming temporary members of the domain. This can naturally be done by mandating that the guest user's device must address the domain management device directly (i.e. using an online connection) to request the appropriate domain key.

In a simple implementation, a user wishing to access content on a non-domain device must contact a remote DRM domain server each time he wishes to access the content (the "online model"). As the reader will readily appreciate, this results in substantial overheads and restrictions in functionality.

One alternative that has been considered is to transfer the domain key directly from a permanent (domain) member to the temporary member. This scheme, however, raises further concerns. Version control, compliance and trust are all important when granting temporary access to a guest device.

From a technical point of view, for example, certain DRM systems are incapable of maintaining an updated version of the domain key in a user authentication device (because of their communication characteristics and capabilities) under these circumstances. Furthermore, in order to let a permanent member distribute the domain key, that permanent member has to verify the compliance of the other "guest" device. Maintaining updated revocation status information (e.g. Certificate Revocation Lists, CRLs, or authorization lists) is difficult in devices that are only infrequently "online", especially user identification devices that do not regularly receive content. Thus the permanent member may distribute a domain key to a non-authorised guest. Finally, many people and organizations simply do not trust consumer devices for the distribution of the domain key. Thus, such an "offline" solution has clear disadvantages.

Sharing content in a domain poses other problems. A device might be added to the user's domain to obtain content. The content thus obtained might be used without the user's presence and/or permission. To counter this, it is known to limit the use of devices by rendering content only if a user can prove his presence to a given device (using user based access, guest access, etc.). American patent application US 2004/0133640 describes a system where member devices need to ask for renewal of membership to gain access again to group content.

Short range wireless communication technologies such as near field communication (NFC) and Bluetooth have been used to simplify the process of adding a device to a domain when a (domain management) device is in near proximity.

Likewise, the rendering of content on a given device can be made contingent on the predetermined proximity of a "trigger device" (Digital Transmission Content Protection over Internet Protocol, DTCP-IP).

Whether consulting with a server each time a user wishes to access content or using a permanent member to mediate access, the non-domain member faces a number of hurdles. Non-domain members must have access to the server (thus requiring suitable connectivity), and even when a non-domain member uses a permanent member as a proxy, that permanent member must have connectivity. In either case, gaining access will take additional time. This problem will be compounded in circumstances where the server becomes overloaded, as might happen when attempting to handle a lot of connectivity requests from non-domain devices that want to temporarily join a domain. It is therefore an object of the invention to obviate or at least mitigate the aforementioned problems.

In accordance with one aspect of the present invention, there is provided a method as defined in claim 1. In a preferred implementation of the method, the domain access data stored by the guest device includes a shared domain key (DomK) and the enabling message includes data that has been signed by the domain key, thereby confirming that the authentication device has access to the domain and has domain extension rights.

In an alternative implementation of the method, previous access to the domain was granted *by the authentication device,* the domain access data stored by the guest device includes data for identifying the authentication device, and the enabling message further includes data for identifying the authentication device, this identification data being signed by a private key of the authentication device, thereby allowing the guest device to verify that the enabling message originated in the authentication device.

The extension rights may include validity data, which indicate the limited duration for which the guest device is to be given access to the domain.

The authentication device is preferably a permanent domain member device.

Conveniently, the authentication device maintains a log of authentication events, the log recording the time and domain identifier for each event.

In the distribution of the domain key, it is firstly determined whether the guest device is in the proximity of a permanent member of the domain (based on authentication, location and the like). The compliance status of the temporary guest device is then verified. The domain key is transmitted to the temporary guest device. In the following it is assumed that domain policy stipulates that guest access is time-limited such that the domain key is operational in the temporary member for a predetermined time.

The invention provides a level of security equal to the situation where the server would be involved in *all* subsequent guest accesses. Furthermore, the conditions under which the domain key is handed over are equivalent to the "online" model and rely on the compliance of the device (i.e. evidence that the device has not been hacked).

Thus the invention enables guest access to a DRM domain system without the need to always contact a remote DRM domain server (the "online model").

For a better understanding of the present invention, reference will now be made, by way of example only, to the accompanying drawings in which:-
Fig 1 illustrates the flow of events in one form of proximity based domain joining protocol;
Fig 2 illustrates the flow of events in accordance with a first embodiment of the invention, where domain joining has followed the protocol illustrated in Fig 1;
Fig 3 illustrates the flow of events in an alternative form of proximity based domain joining protocol; and
Fig 4 illustrates the flow of events in accordance with an alternative embodiment of the invention, where domain joining has followed the protocol illustrated in Fig 3.

One version of DRM protocol, OMA-DRMv2, implements a device-based Authorized Domain mechanism through a shared key and deploys compliance management on RIs (i.e. servers). This means both that a device must obtain a domain key in order to access domain content and that an end-user device can only receive a domain key from a server, after the server has checked compliance of the device.

The device-based Authorized Domain mechanism is used for rather static and small domains of devices. The participating devices are at some point joined to the domain, receive the shared key and can access domain content for a long period of time. If the domain manager would allow for a large domain or it would allow devices to join and leave a domain very dynamically, then this would enable people to grant many of their friends easy access to their content very easily. Typically, this will not be allowed.

Conveniently, domain based systems will not be solely device-based, they may take a hybrid approach in which the domain consists of both devices and users. Content in such a hybrid approach can be rendered on all devices that are part of the domain and/or on all compliant devices for which the user, a member of the domain, has been authenticated. The latter is typically used by a user to access his content in hotel rooms or at the house of friends while he/she is present (Guest Access). Users typically use devices/tokens (e.g. mobile phone with SIM, smartcard or other person identification/user authentication devices) or biometrics to prove their presence.

In the following description, the devices and the users (and associated user authentication devices) permanently associated with the domain are referred to as permanent members of the domain. To enable the desired functionality, the system must be extended such that permanent members can allow addition of non-domain devices to the domain temporarily. Note that it is up to the system which permanent members it allows to authorize temporary membership to others, e.g. only user authentication devices, or domain devices in general.

This means that the number of permanent members can be kept small and that access to content on non-permanent members would require proximity of a permanent member, which restricts content proliferation. After some time (the expiry time) it should no longer be possible to access content via the temporary member.

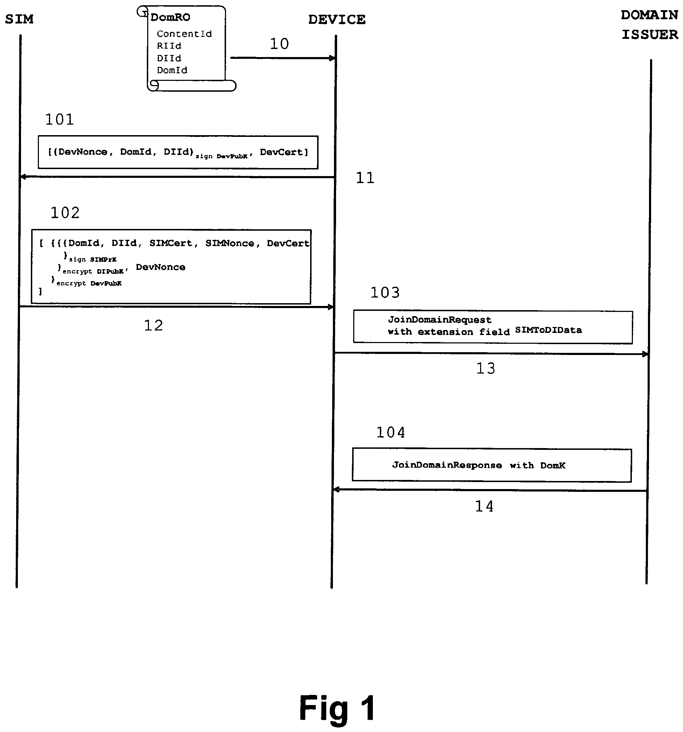

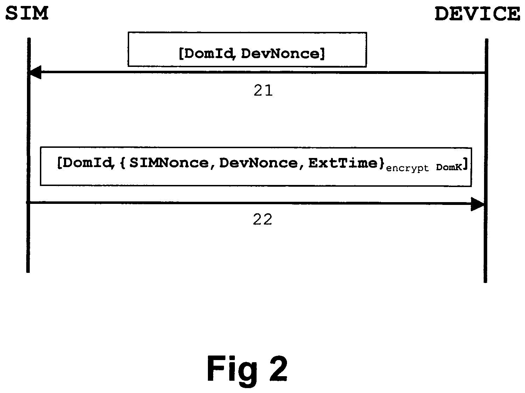

Consider a first embodiment of the invention, as illustrated in Figs 1 and 2. Here a user wishes to have guest access to an OMA DRM domain. For the purposes of illustration, the user's SIM is used as user identification device. Domain membership extension is described in the situation where the user gains possession of an appropriate shared domain key.

The first time a non-domain device is asked to temporarily join a domain, it must contact the server (RI or a dedicated "domain issuer", DI) to receive the shared domain key (DomK). However, after the expiry time it will not delete the domain key. Instead it will remember the key but refrain from using it to allow content access. This means that on subsequent occasions, where it is asked to temporarily join that domain, it still has access to the domain key, which means that it does not need to contact a server to get it.

Allowing a temporary member to remember the domain key and use it repeatedly without repeatedly checking compliance of the temporary member is not a security gap. Provided the device is not hacked, then it will obey the rules and disable content access after the new expiry time.

If the device is hacked after it has received a domain key, then it must be assumed that the domain content on that device is lost anyway. Allowing the device to continue using the domain key is not a problem. If the hack is detected, the domain manager (OMA: at RI server) will issue a new key for the domain, forcing every device to request a new key after which compliance can be checked. The hacked device will not receive the new key. A similar reasoning would apply if a permanent member were hacked and the hack detected.

Assume, for the purposes of this embodiment, that a permanent domain member is a user whose identity is associated with a SIM card. The permanent member may thus use the SIM card to authenticate himself to devices, thereby accessing his content.

The temporary access protocol consists of two parts: an initial JoinDomain protocol and an "extension" protocol.

While the invention is embodied in the extension protocol, the JoinDomain protocol is given for reasons of completeness of understanding. There are, of course, circumstances in which the JoinDomain protocol is omitted. There may, for example, be instances where a device has obtained the domain key, DomK, by a "non-standard" route: where first user authentication used a regular OMAv2 device-based JoinDomain followed by a LeaveDomain, thereby preserving the domain key.

The JoinDomain protocol may be triggered by proximity. The protocol follows the message flow defined in the OMA DRMv2 ROAP protocol (which is incorporated herein by reference). One additional exchange is added between the device and the SIM card prior to the conventional JoinDomain functionality, but the JoinDomain protocol between device and RI/DI is minimally impacted. The SIM card also generates data in this initial step that needs to be transmitted securely to the RI. This data is included as one extension field of the ROAP JoinDomainRequest message (once again the impact to the conventional specifications is very limited).

Referring now to Fig 1, Step 10 represents the guest user device receiving a domain RO (Rights Object), which contains the identity of the domain for which the rights were issued and the identity of DI/RI that issued them. The device scans its internal table and cannot find an entry from the associated domain, i.e. the device is not part of the domain. The device looks for SIM cards in its proximity that can help it joining the domain.

At Step 11, the device detects a SIM card and transfers a first message 101 asking the SIM for support to join the domain. The first message 101 has a number of fields including: DevNonce, DomId, DIId (all signed with the device's private key, DevPrK) and DevCert.

The fields are passed from the device for different reasons: DevNonce, a nonce/random value generated by the device to.avoid replay attacks; DomId and DIId, to identify the domain uniquely; and the device certificate, DevCert (which includes the device's public key, DevPubK), so that the device can be identified. DevNonce, DomId, and DIId are signed with DevPrK to ensure the integrity of the join request message when it is received by the SIM. The certificate, DevCert, may be used by the SIM (or RI/DI) to verify that the device is a compliant device with a particular identity and in possession of the associated private key.

Step 12 denotes generation of a second message 102 in response to the receipt of the join request message, whereupon the SIM checks its integrity through the device signature and certificate. Then it checks in its internal table whether it is part of the requested domain. If it is not, an error message is sent back to the device (not shown).

If the SIM is confirmed to be part of the domain, the SIM will generate the second (positive) message 102 in response to the device. The fields included in the second message 102 are: the requested DomId; the requested DIId; the SIMCert that will be used by the RI/DI to identify the requesting SIM and retrieve the SIMPubK; a SIMNonce field, included to diversify the response sent to the device; and DevCert, which contains the identity to be added to the domain. The SIMNonce field, it will be noted, prevents any device from being able to trace the SIM card by virtue of the generation of a fixed response message 102 to repeated instances of the same request message 101 in Step 11.

The second message 102 takes the form:

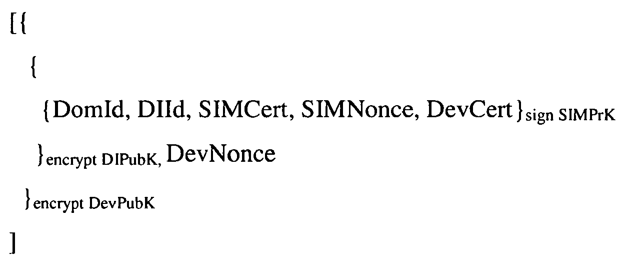

The response message 102 includes information for the device (i.e. DevNonce) but also data that the device needs to forward to the RI (or DI) as part of the JoinDomain protocol. The data for forwarding is encrypted with the DIPubK so that neither the device, nor any other intermediate entity, can interpret it.

The SIM, being a member of the domain, already knows the DI public key. If the relationship between the SIM and the DI is fixed, the DI public key can be stored on the SIM during the personalisation phase in the factory. If a more dynamic behaviour is expected where the SIM can interact with several DIs in an ad-hoc mode, the public key of the different DIs can be uploaded to the SIM once it is in the field using existing secure protocols, e.g. over the air data download.

The data for forwarding in the second message 102, {DomId, DIId, SIMCert, SIMNonce, DevCert}, is signed with SIMPrK to prove to the RI/DI that the JoinDomain request is done with the support of this SIM. The signed data is then encrypted with DIPubK to ensure integrity and privacy between the SIM card and DI.

For the rest of this description and to simplify the notation we will rename this signed encrypted data as "SIMToDIData". SIMToDIData is {{DomId, DIId, SIMCert, SIMNonce, DevCert}_{sign SIMPrK}}_{encrypt DIPubK}.

Further data, DevNonce, is included so that the device can relate the response to the request. Furthermore, it prevents old SIM responses being replayed.

All the data (SIMToDIData, DevNonce) is encrypted with DevPubK (the public key for the device) for integrity and privacy purposes. Consequently, the SIM also asserts that it is talking to the device that possesses the corresponding private key (i.e. DevPrK): in other words only the device that initially contacted the SIM can process the second (response) message 102 in Step 12. Note that the encryption binds the SIM SIMToDIData securely to DevNonce.

In Step 13, the device receives the second message 102 in answer from the SIM and decrypts it with DevPrK. After checking the received DevNonce against the one it sent in Step 11, the device transmits a ROAP JoinDomain Request (a third message) to the RI/DI. As an extension field, the device includes the SIMToDIData received from the SIM.

The RI/DI receives the third (ROAP request) message 103 from the device (Step 14). First the RI/DI validates the ROAP request (following OMA DRM v2 specification). Then the RI/DI decrypts SIMToDIData using DIPrK. The RI/DI thus has: DomId; DIId; SIMCert; SIMNonce; and DevCert.

The RI/DI then verifies the SIM's signature. Furthermore, it verifies that the SIM is a member of the domain indicated by DomID and DIId. Next, it checks that the DevCert used in the ROAP Protocol corresponds to the one sent by the SIM. The same applies to DomId and DIId.

Provided each of these verification substeps is successfully negotiated, the RI/DI is convinced that the device and SIM are in each other's proximity and that the SIM is in the right domain. A positive JoinDomain response (a fourth message 104) is sent to the device. This fourth message 104 transfers the DomK in the conventional (OMAv2) manner.

In a variation of the SIM discovery process in Step 10 of the JoinDomain protocol, a field can be defined that specifies or provides evidence that an entity is a SIM that can be used in the enhanced protocol.

Likewise, the enhanced ROAP protocol may be integrated in the JoinDomain protocol, so that the cellular link of the mobile handset in which the SIM is inserted could be used for the communication between device and RI/DI. In this case, Step 10 could be launched directly from the handset and not from a received Domain RO.

Having outlined the operation of the JoinDomain protocol, it is now possible to explain the operation of the inventive domain extension protocol: Fig 2 illustrates the main steps in its operation.

The domain extension protocol is a unilateral challenge-response authentication technique based on symmetric-key techniques (shared DomK). In the operation of this protocol, the SIM does not have to authenticate the device, because the device already possesses the necessary secrets (DomK) and has proven its compliance when it received those secrets.

In Step 21, the device detects a SIM and asks the SIM for extension onto a domain. Parameters passed from the device are DomId and DevNonce.

DomId indicates for which domain the device would like to extend its membership. The parameter DomId includes data from both DomID and DIId fields of the JoinDomain protocol. DevNonce is a nonce/random value generated by the device to avoid replay attacks and ensure freshness.

A device may perform the domain extension protocol for several domains by executing the protocol for different domains with the same SIM.

Upon reception of the previous message, the SIM checks whether it is part of the requested domain (Step 22). If it is not, an error message is sent back to the device.

If the SIM is part of the domain, a response message is sent to the device. The response message includes the following fields: DomId (from incoming message), thereby allowing the device to associate the message with the correct request; SIMNonce; DevNonce; and ExtTime. The last three fields {SIMNonce, DevNonce, ExtTime} are encrypted with the (shared) DomK.

SIMNonce randomizes the response message to prevent known- and chosen-text attacks.

ExtTime indicates the allowed extension time. Typically, this parameter would form part of the domain policy. Indeed, ExtTime may be considered optional as it depends where and how the domain policy that defines the extension time is distributed and enforced.

Upon reception of the response message, the device decrypts DevNonce with the DomK associated with DomId, and verifies that DevNonce is the same as it sent in its original request (Step 21). Encryption of the DevNonce with DomK proves to the device that the SIM is authorized to provide a domain extension, because the SIM knows DomK.

The entities acting in the extension protocol need to store different parameters. The SIM stores DomId (including DIId) and DomK, whereas the device itself stores DomId (including DIId), DomK, and ValidityTime. The latter parameter generally forms part of conventional OMA DRMv2 DomainContext data.

In a variant of the extension protocol, the RI/DI sends a nonce to the SIM and receives the authenticated nonce back from the SIM. In this case, it is not the device that verifies that the SIM is actually present, but the RI/DI. This alternative would not conform to the requirement that the communication between device and RI/DI should stick to the existing OMA DRMv2 ROAP protocol with JoinDomainRequest/JoinDomainResponse.

In another variant, the SIM card may be provided with logging capabilities for logging the authentication it participates in. The SIM would then store [DomId, Time] for each authentication event and report that to the RI/DI when certain thresholds are passed making detection of these mechanisms possible. This is especially feasible if the SIM and RI/DI are associated with the same mobile operator/service provider.

Authentication between SIM and device may comprise explicit protocol steps to ensure that a maximum distance is not exceeded.

This embodiment reused the domain key (DomK) to prove to the temporary member device that it is communicating with a fixed member device. This has a number of advantages.

Domain membership extension can in principle be done by any permanent member, whether it is a user authentication device or a rendering device, as long as it has received the domain key (DomK) during registration to the domain.

In this system, user authentication devices need to have the domain key even when they do not need it to get access to content. The domain key is used for a second purpose.

Conveniently, the extension protocol includes a housekeeping functionality for keeping the extension protocol working efficiently. This is particularly necessary should the domain key become updated: under these circumstances, (user authentication) devices can become out of sync with the domain key they use.

It is not always convenient or desirable to require that the domain key must be present in the user authentication device (SIM), as has been illustrated in the preceding description.

In one alternative embodiment of the present invention, a solution is presented where the SIM neither needs nor has the domain key. This alternative embodiment provides guest access for OMA DRM using a user identification device and identity caches for domain membership extension.

In this embodiment, a device records the identity of the permanent member device that allowed temporal membership and extends domain membership after authentication of the same user authentication/permanent device at a later moment in time.

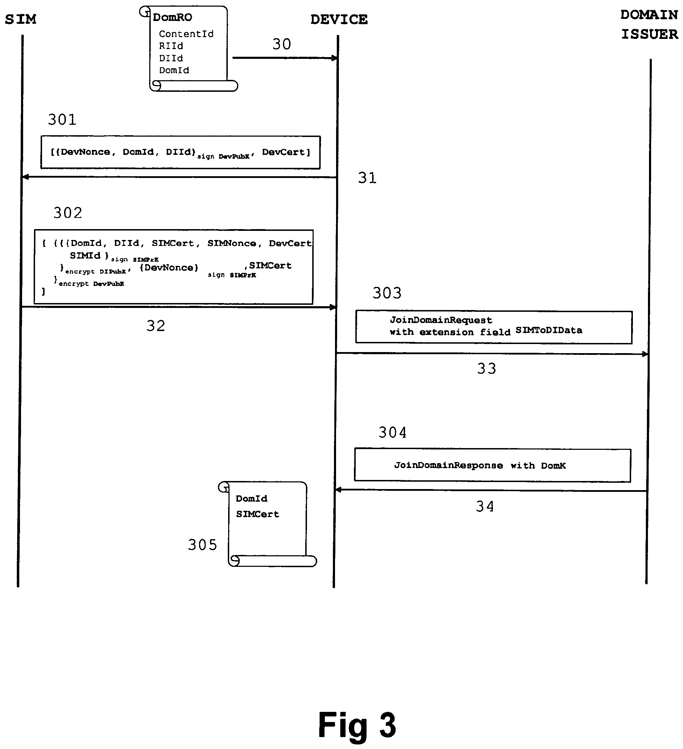

To implement this embodiment, the proximity based JoinDomain protocol 100 is altered to include SimId or SimCert in the second message 302 together with a signature by the SIM to authenticate the permanent member device (see Fig 3). The recipient verifies the identity. Compliance, however, is verified by the RI/DI. In another change to the JoinDomain protocol, the device adds an entry in the table of previous authenticated devices for certain domains upon receipt of the fourth message 104 (domain key). The entry taking the form <DomId, SimCert (or SimPubK)>

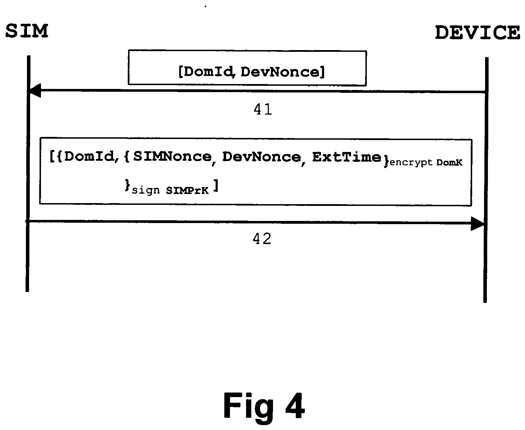

The domain extension protocol is also changed in this embodiment (see Fig 4). The response message (in Step 22) is altered such that the SIM signs the message with its private key (SimPrK) to authenticate the SIM. The signature can be verified with the stored SimPubK which was stored as part of the (altered) JoinDomain protocol (see above). The unilateral authentication based on symmetric keys is changed into unilateral authentication based on asymmetric keys for which many protocols exist.

This embodiment too has variants. The altered protocols allow compliance of user authentication devices to be checked on a regular basis by requesting verification of the compliance status for each entry in the table of previous authenticated devices (e.g. after a given number of content accesses or simply when an online connection is detected to the correct RI/DI).

Using the altered protocol, there need be no domain key on user authentication devices. Furthermore, the domain key is not used for multiple purposes.

However, offline domain membership extensions will only work under this embodiment if the *same* user authentication/permanent device is used instead of any permanent domain device. In addition, special measures must be taken to hide the identity of the SIM if the user authentication device/permanent member device is a SIM, because in general the SIM identity should not leak.

In the foregoing it will be appreciated that, in many cases the RI and DI are the same server thus the use of the abbreviation RI/DI. It is nonetheless contemplated that the tasks of issuing rights objects and domain keys may be assigned to different servers. The invention applies equally to both types of arrangement.

## Claims

1. A method for operating a local authentication device to grant a guest device access to a rights domain, the guest device
previously having had access to the domain and
storing corresponding domain access data comprising a domain key; the method including:
receiving a rejoin message from the guest device, the rejoin message including data indicating the domain to which access is requested; and provided
the authentication device has extension rights with respect to the indicated domain,
transmitting an enabling message to the guest device, the enabling message including data that allows the guest device to confirm that the authentication device has suitable extension rights, thereby allowing the guest device to rejoin the domain in accordance with the extension rights and facilitating access by the guest device to content belonging to the domain; in which
the domain key stored by the guest device is operational for a limited predetermined time.

2. A method as claimed in claim 1, wherein the domain access data stored by the guest device includes a shared domain key, DomK, and wherein the enabling message includes data that has been signed by the domain key, thereby confirming that the authentication device has access to the domain and has domain extension rights.

3. A method as claimed in claim 1,
wherein previous access to the domain was granted by the authentication device,
wherein the domain access data stored by the guest device includes data for identifying the authentication device, and
wherein the enabling message further includes data for identifying the authentication device, this identification data being signed by a private key of the authentication device, thereby allowing the guest device to verify that the enabling message originated in the authentication device.

4. A method as claimed in any one of claims 1, 2 or 3, wherein the extension rights include validity data, which indicate the duration for which the guest device is to be given access to the domain.

5. A method as claimed in any one of the preceding claims, wherein the authentication device is a permanent domain member device.

6. A method as claimed in any one of the preceding claims, wherein the authentication device maintains a log of authentication events, the log recording the time and domain identifier for each event.

7. A system for managing access to a rights domain, the system comprising:
a guest device, upon which is stored domain access data corresponding to the rights domain the domain access data comprising a domain key; and
a local authentication device for
receiving a rejoin message from the guest device, the rejoin message including data indicating the domain to which access is requested; for
checking whether the authentication device has extension rights with respect to the indicated domain; and provided the authentication device has such extension rights, for
transmitting an enabling message to the guest device, the enabling message including data that allows the guest device to confirm that the authentication device has suitable extension rights, thereby allowing the guest device to rejoin the domain in accordance with the extension rights and facilitating access by the guest device to content belonging to the domain; in which
the domain key stored by the guest device is operational for a limited predetermined time.

8. A system as claimed in claim 7, wherein the domain access data stored by the guest device includes a shared domain key, DomK, and wherein the enabling message includes data that has been signed by the domain key, thereby confirming that the authentication device has access to the domain and has domain extension rights.

9. A system as claimed in claim 7,
wherein the local authentication device is further operable to facilitate initial access events in which domain access data corresponding to rights domains are stored on guest devices.

10. A system as claimed in claim 9,
wherein previous access to the domain was granted by the authentication device,
wherein the domain access data stored by the guest device includes data for identifying the authentication device, and
wherein the enabling message further includes data for identifying the authentication device, this identification data being signed by a private key of the authentication device, thereby allowing the guest device to verify that the enabling message originated in the authentication device.

11. A system as claimed in any one of claims 7, 8, 9 or 10, wherein the extension rights include validity data, which indicate the duration for which the guest device is to be given access to the domain.

12. A system as claimed in any one of claims 7 to 11, wherein the authentication device is a permanent domain member device.

13. A system as claimed in any one of claims 7 to 12, wherein the authentication device is further operable to maintain a log of authentication events, the log recording the time and domain identifier for each event.

## Patentansprüche

1. Verfahren zum Betreiben einer lokalen Authentifizierungsvorrichtung, um einer Gastvorrichtung den Zugriff auf eine Rechtedomäne zu gewähren, wobei die Gastvorrichtung
zuvor Zugriff auf die Domäne hatte und
entsprechende Domänenzugriffsdaten, die einen Domänenschlüssel umfassen, speichert;
wobei das Verfahren Folgendes umfasst:
Empfangen einer Vereinigungsnachricht von der Gastvorrichtung, wobei die Vereinigungsnachricht Daten umfasst, die die Domäne angeben, auf die der Zugriff angefordert wird; und vorausgesetzt, dass die Authentifizierungsvorrichtung Erweiterungsrechte in Bezug auf die angegebene Domäne hat, Übertragen einer Freigabenachricht an die Gastvorrichtung, wobei die Freigabenachricht Daten umfasst, die es der Gastvorrichtung erlauben, zu bestätigen, dass die Authentifizierungsvorrichtung über geeignete Erweiterungsrechte verfügt, wodurch der Gastvorrichtung erlaubt wird, sich mit der Domäne gemäß den Erweiterungsrechten zu vereinigen, und Ermöglichen des Zugriffs durch die Gastvorrichtung auf Inhalte, die zu der Domäne gehören; wobei der Domänenschlüssel, der von der Gastvorrichtung gespeichert wird, für eine begrenzte vorbestimmte Zeit betriebsbereit ist.

2. Verfahren nach Anspruch 1, wobei die Domänenzugriffsdaten, die von der Gastvorrichtung gespeichert werden, einen gemeinsamen Domänenschlüssel, DomK, umfassen und wobei die Freigabenachricht Daten umfasst, die von dem Domänenschlüssel signiert wurden, wodurch bestätigt wird, dass die Authentifizierungsvorrichtung Zugriff auf die Domäne hat und Domänenerweiterungsrechte hat.

3. Verfahren nach Anspruch 1,
wobei der vorherige Zugriff auf die Domäne durch die Authentifizierungsvorrichtung erteilt wurde,
wobei die Domänenzugriffsdaten, die von der Gastvorrichtung gespeichert werden, Daten zum Identifizieren der Authentifizierungsvorrichtung umfassen und
wobei die Freigabenachricht ferner Daten zum Identifizieren der Authentifizierungsvorrichtung umfasst, wobei diese Identifikationsdaten von einem privaten Schlüssel der Authentifizierungsvorrichtung signiert werden, wodurch der Gastvorrichtung erlaubt wird, zu überprüfen, ob die Freigabenachricht von der Authentifizierungsvorrichtung stammt.

4. Verfahren nach einem der Ansprüche 1, 2 oder 3, wobei die Erweiterungsrechte Gültigkeitsdaten enthalten, die die Dauer angeben, für die die Gastvorrichtung Zugriff auf die Domäne erhält.

5. Verfahren nach einem der vorhergehenden Ansprüche, wobei die Authentifizierungsvorrichtung eine permanente Domänenmitgliedsvorrichtung ist.

6. Verfahren nach einem der vorhergehenden Ansprüche, wobei die Authentifizierungsvorrichtung ein Protokoll von Authentifizierungsereignissen verwaltet, wobei das Protokoll die Zeit- und Domänenkennung für jedes Ereignis aufzeichnet.

7. System zur Verwaltung des Zugriffs auf eine Rechtedomäne, wobei das System Folgendes umfasst:
eine Gastvorrichtung, auf der Domänezugriffsdaten gespeichert sind, die der Rechtedomäne entsprechen, wobei die Domänenzugriffsdaten einen Domänenschlüssel umfassen; und
eine lokale Authentifizierungsvorrichtung zum Empfangen einer Vereinigungsnachricht von der Gastvorrichtung, wobei die Vereinigungsnachricht Daten umfasst, die die Domäne angeben, auf die der Zugriff angefordert wird; um zu prüfen, ob die Authentifizierungsvorrichtung Erweiterungsrechte in Bezug auf die angegebene Domäne hat;
und sofern die Authentifizierungsvorrichtung derartige Erweiterungsrechte hat, um eine Freigabenachricht zu der Gastvorrichtung zu übertragen, wobei die Freigabenachricht Daten umfasst, die es der Gastvorrichtung erlauben, zu bestätigen, dass die Authentifizierungsvorrichtung geeignete Erweiterungsrechte hat, wodurch der Gastvorrichtung ermöglicht wird, sich mit der Domäne gemäß den Erweiterungsrechten zu vereinigen, und der Zugriff durch die Gastvorrichtung auf Inhalte, die der Domäne angehören, ermöglicht wird; wobei der Domänenschlüssel, der von der Gastvorrichtung gespeichert wird, für eine begrenzte vorbestimmte Zeit betriebsbereit ist.

8. System nach Anspruch 7, wobei die Domänenzugriffsdaten, die von der Gastvorrichtung gespeichert werden, einen gemeinsamen Domänenschlüssel, DomK, umfassen und wobei die Freigabenachricht Daten umfasst, die von dem Domänenschlüssel signiert wurden, wodurch bestätigt wird, dass die Authentifizierungsvorrichtung Zugriff auf die Domäne hat und Domänenerweiterungsrechte hat.

9. System nach Anspruch 7,
wobei die lokale Authentifizierungsvorrichtung ferner in der Lage ist, anfängliche Zugriffsereignisse zu ermöglichen, wobei Domänenzugriffsdaten, die Rechtedomänen entsprechen, auf Gastvorrichtungen gespeichert sind.

10. System nach Anspruch 9,
wobei der vorherige Zugriff auf die Domäne durch die Authentifizierungsvorrichtung erteilt wurde,
wobei die Domänenzugriffsdaten, die von der Gastvorrichtung gespeichert werden, Daten zum Identifizieren der Authentifizierungsvorrichtung umfassen und
wobei die Freigabenachricht ferner Daten zum Identifizieren der Authentifizierungsvorrichtung umfasst, wobei diese Identifikationsdaten von einem privaten Schlüssel der Authentifizierungsvorrichtung signiert werden, wodurch der Gastvorrichtung erlaubt wird, zu überprüfen, ob die Freigabenachricht von der Authentifizierungsvorrichtung stammt.

11. System nach einem der Ansprüche 7, 8, 9 oder 10, wobei die Erweiterungsrechte Gültigkeitsdaten enthalten, die die Dauer angeben, für die die Gastvorrichtung Zugriff auf die Domäne erhält.

12. System nach einem der Ansprüche 7 bis 11, wobei die Authentifizierungsvorrichtung eine permanente Domänenmitgliedsvorrichtung ist.

13. System nach einem der Ansprüche 7 bis 12, wobei die Authentifizierungsvorrichtung ferner in der Lage ist, ein Protokoll von Authentifizierungsereignissen zu verwalten, wobei das Protokoll die Zeit- und Domänenkennung für jedes Ereignis aufzeichnet.

## Revendications

1. Procédé d'exploitation d'un dispositif d'authentification local pour accorder à un dispositif invité un accès à un domaine de droits, le dispositif invité
ayant antérieurement eu accès au domaine et
stockant des données d'accès au domaine correspondantes comprenant une clé de domaine ;
le procédé incluant les opérations consistant à :
recevoir un message Rejoindre en provenance du dispositif invité, le message Rejoindre incluant
des données indiquant le domaine auquel l'accès est demandé ; et à condition que le dispositif d'authentification possède des droits d'extension par rapport au domaine indiqué, transmettre un message de validation au dispositif invité, le message Rejoindre
incluant des données qui permettent au dispositif invité de confirmer que le dispositif d'authentification possède des droits d'extension appropriés, ce qui par conséquent autorise le dispositif invité à rejoindre le domaine en conformité avec les droits d'extension et facilite l'accès par le dispositif invité à un contenu appartenant au domaine ; dans lequel
la clé de domaine stockée par le dispositif invité est opérationnelle pendant une période prédéterminée limitée.

2. Procédé selon la revendication 1, les données d'accès au domaine stockées par le dispositif invité incluant une clé de domaine partagée, DomK, et le message de validation incluant des données qui ont été signées par la clé de domaine, confirmant par conséquent que le dispositif d'authentification a accès au domaine et a des droits d'extension de domaine.

3. Procédé selon la revendication 1,
un accès antérieur au domaine ayant été accordé par le dispositif d'authentification,
les données d'accès au domaine stockées par le dispositif invité incluant des données pour identifier le dispositif d'authentification, et
le message de validation incluant en outre des données pour identifier le dispositif d'authentification, ces données d'identification étant signées par une clé privée du dispositif d'authentification, ce permet par conséquent au dispositif invité de vérifier que le message de validation avait son origine dans le dispositif d'authentification.

4. Procédé selon l'une quelconque des revendications 1, 2 ou 3, les droits d'extension incluant des données de validité, qui indiquent la durée pendant laquelle l'accès au domaine doit être donné au dispositif invité.

5. Procédé selon l'une quelconque des revendications précédentes, le dispositif d'authentification étant un dispositif de membre permanent du domaine.

6. Procédé selon l'une quelconque des revendications précédentes, le dispositif d'authentification maintenant un journal des événements d'authentification, le journal enregistrant l'heure et l'identifiant de domaine pour chaque événement.

7. Système de gestion d'accès à un domaine de droits, le système comprenant :
un dispositif invité sur lequel sont stockées des données d'accès au domaine correspondant au domaine de droits, les données d'accès au domaine comprenant une clé de domaine ; et
un dispositif d'authentification local pour
recevoir un message Rejoindre en provenance du dispositif invité, le message Rejoindre incluant des données indiquant le domaine auquel l'accès est demandé ;
pour
vérifier si le dispositif d'authentification possède des droits d'extension par rapport au domaine indiqué ; et à condition que le dispositif d'authentification possède de tels droits d'extension, pour
transmettre un message de validation au dispositif invité, le message de validation incluant des données qui permettent au dispositif invité de confirmer que le dispositif d'authentification possède des droits d'extension appropriés, ce qui autorise par conséquent le dispositif invité à rejoindre le domaine en conformité avec les droits d'extension et facilite l'accès par le dispositif invité à un contenu appartenant au domaine ; dans lequel
la clé de domaine stockée par le dispositif invité est opérationnelle pendant une période prédéterminée limitée.

8. Système selon la revendication 7, les données d'accès au domaine stockées par le dispositif invité incluant une clé de domaine partagée, DomK, et le message de validation incluant des données qui ont été signées par la clé de domaine, confirmant par conséquent que le dispositif d'authentification a accès au domaine et a des droits d'extension de domaine.

9. Système selon la revendication 7,
le dispositif d'authentification local étant exploitable en outre de façon à faciliter des événements d'accès initial dans lesquels les données d'accès au domaine correspondant aux domaines de droits sont stockées sur des dispositifs invités.

10. Système selon la revendication 9,
un accès antérieur au domaine ayant été accordé par le dispositif d'authentification, les données d'accès au domaine stockées par le dispositif invité incluant des données pour identifier le dispositif d'authentification, et
le message de validation incluant en outre des données pour identifier le dispositif d'authentification, ces données d'identification étant signées par une clé privée du dispositif d'authentification, ce permet par conséquent au dispositif invité de vérifier que le message de validation avait son origine dans le dispositif d'authentification.

11. Système selon l'une quelconque des revendications 7, 8, 9 ou 10, les droits d'extension incluant des données de validité, qui indiquent la durée pendant laquelle l'accès au domaine doit être donné au dispositif invité.

12. Système selon l'une quelconque des revendications 7 à 11, le dispositif d'authentification étant un dispositif de membre permanent du domaine.

13. Système selon l'une quelconque des revendications 7 à 12, le dispositif d'authentification étant exploitable en outre de façon à maintenir un journal des événements d'authentification, le journal enregistrant l'heure et l'identifiant de domaine pour chaque événement.
